(19) Europäisches Patentamt / European Patent Office / Office européen des brevets

(11) **EP 4 498 555 A1**

(12) **EUROPEAN PATENT APPLICATION**

(43) Date of publication:
**29.01.2025 Bulletin 2025/05**

(21) Application number: **23202562.7**

(22) Date of filing: **10.10.2023**

(51) International Patent Classification (IPC):
**H02J 3/01** $^{(2006.01)}$

(52) Cooperative Patent Classification (CPC):
**H02J 3/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.07.2023 PL 44568423**

(71) Applicant: **Akademia Gorniczo-Hutnicza im. Stanislawa Staszica w Krakowie 30-059 Krakow (PL)**

(72) Inventors:
• **Kosiorowski, Stanis aw 30-611 Kraków (PL)**
• **Stobiecki, Andrzej 30-348 Kraków (PL)**
• **Dudek, Roman 32-020 Wieliczka (PL)**

(74) Representative: **Wlasienko, Jozef et al Polservice Kancelaria Rzeczników Patentowych Sp. z o.o. Ul. Bluszczanska 73 00-712 Warszawa (PL)**

(54) **METHOD FOR DETERMINING COMPENSATOR CURRENT IN ELECTRIC CIRCUITS WITH NON-SINUSOIDAL WAVEFORMS**

(57) The subject of the invention is a method for determining compensator current in a single-phase alternating current electrical circuit with a linear resistive-inductive load and with periodic non-sinusoidal waveforms of voltage and current, which can be written, taking into account the initial phases of voltage harmonics, in the form of Fourier series as a sum of sinusoidal functions with a dominant first harmonic. The periodic non-sinusoidal waveforms of power source voltage and current, after shifting in time such that the phase of the first harmonic of voltage equals zero, are decomposed into even and odd components. The odd component of the source current is the sum of useful current in the form of

$$i_u(t) = \sum_{n=1}^{\infty} \sqrt{2} I_n \sin(n\omega t) \cos\varphi_n \cos(\psi_n - n\psi_1)$$, where: n - harmonic order, $I_n$ - effective value of the n-th harmonic of current, $\omega$ - angular frequency of the fundamental harmonic, $\varphi_n$ - phase shift between the n-th harmonic of voltage and current, $\psi_n$ - initial phase of the n-th harmonic of voltage, wherein the terms of the useful current $i_u(t)$ add up with the first harmonic component of the source current and these terms in the form of sinusoidal waveforms are proportional to the corresponding harmonics of the odd component of the source voltage, and of orthogonal detrimental current with a value equal to $$i_d(t) = \sum_{n=2}^{\infty} \sqrt{2} I_n \sin(n\omega t) \sin\varphi_n \sin(\psi_n - n\psi_1)$$, the terms of which do not add up with the first harmonic of the source current, and which is particularly important due to the possibility of determining the compensator current. Then, based on an analysis of instantaneous and active power of the source, using the source current in the form of a sum of the even component $$i_p(t) = \sum_{n=1}^{\infty} \sqrt{2} I_n \cos(n\omega t) [cos\varphi_n \sin(\psi_n - n\psi_1) - sin\varphi_n \cos(\psi_n - n\psi_1)]$$ and of the odd component of the source current $i_n(t)$ composed of the useful current $i_u(t)$ and the detrimental current $i_d(t)$, a component of the source current $i_k(t)$ is determined, which should be eliminated from the waveform of the source current by means of a known compensator (K) in the form of a current source with a value of

$$i_k(t) = i_d(t) + i_p(t) = \sum_{n=2}^{\infty} \sqrt{2} I_n \sin(n\omega t) sin\varphi_n sin(\psi_n - n\psi_1) +$$

$$\sum_{n=1}^{\infty} \sqrt{2} I_n \cos(n\omega t) cos\varphi_n sin(\psi_n - n\psi_1) - \sum_{n=1}^{\infty} \sqrt{2} I_n \cos(n\omega t) sin\varphi_n cos(\psi_n - n\psi_1)$$

connected in parallel to the load.

EP 4 498 555 A1

Fig. 2

**Description**

The subject of the invention is a method for determining the compensator current in single-phase alternating current electrical circuits with periodic non-sinusoidal waveforms of supply voltage and with a linear resistive-inductive load. The invention finds application in electrical energy transmission systems, and in particular in compensation systems enabling the improvement of source operating conditions by increasing the value of the source power factor and reducing the value of total harmonic distortion, THD, of the source current, and also enables the transfer of active power from higher harmonics of voltage and current to the load, which results in a reduction in the values of higher harmonic of current flowing through the remaining elements of the power system.

The energy properties of electrical circuits with periodic non-sinusoidal waveforms can be characterized - among others - by the power factor and the total harmonic distortion, THD, of the network current. As a result of the negative impact of static converters on the power supply network, the total harmonic distortion, THD, of the network current deteriorates. A low power factor value results in increased active power losses and voltage drops, as well as deterioration of the use of electricity generation and transmission equipment [Atabiekow G. I.: Teoria liniowych obwodów elektrycznych. WNT, Warszawa, 1967; Cholewicki T.: Elektrotechnika teoretyczna, t. 1. WNT, Warszawa 1973; Supronowicz H.: *Poprawa współ*

*tczynnika mocy ukł tadów przekształtnikowych.* WNT, Warszawa 1981]

There are various countermeasures and methods to eliminate the effects of the unfavorable impact of converters on the network.

US patent specification US9124169B2 discloses an apparatus for reducing total harmonic distortion (THD) including a system of multiple pulse rectifiers coupled to a pair of reversed phase sequence configured autotransformers. Windings of the autotransformers are characterized by turn ratios reducing the THD.

US patent specification US8471488B1 discloses a method for reducing total harmonic distortion (THD) at the AC line input of a power factor corrected (PFC) flyback switch mode power supply (SMPS) by adding additional current injection to the current programming signal of a PFC controller during the period of the line cycle around the peak portion of the AC line voltage.

Polish patent application P.436510 [Kosiorowski S., Stobiecki A., Dudek R.: *Sposób poprawy współ tczynnika*

*mocy i współ tczynnika zawartości harmonicznych, THD*] discloses a method for improving source power factor and total harmonic distortion, THD, of the source current in single-phase alternating current electrical circuits with a linear resistive-inductive load and with periodic non-sinusoidal waveforms, consisting in using two compensators with appropriately designated waveforms of voltage and current. In order to determine these waveforms, the supply source voltage waveform is decomposed, after shifting in time such that the initial phase of the first harmonic of this voltage equals zero, into even and odd components. The even component is compensated by means of a voltage compensator connected in series with the supply voltage source, whereas from the source current waveform caused by the odd component of voltage, the even component of this current is eliminated by means of a current compensator connected in parallel to the load. Use of the compensator connected in series with the power supply source causes a reduction in the effective current value and active power of the source and load. This is due to the reduction of the effective values of higher harmonics of the source and load current, which improves the operating conditions of these devices, related to, among others, oscillations and vibrations and additional stresses in the generator shaft and coupling [Hanzelka Z.: *Jakość energii elektrycznej, cz.4, Wyzsze harmoniczne napi* ć i prqd6w. http://www.twelvee.com.pl/pdf/Hanzelka/cz 4_pelna.pdf (access 30.01.2023)]. The main disadvantage of the above solution is the need to use two compensators. Moreover, with series compensation, electromechanical systems may be unstable [Czarnecki L. S.: *Moce w obwodach elektrycznych z niesinusoidalnymi*

*przebiegami pr dów i napi* ć. Oficyna Wydawnicza Politechniki Warszawskiej, Warszawa 2005].

A method to deliver a set active power to a load at the minimum effective value of the source current in a single-phase system supplied with periodic voltage results from the power theory developed by S. Fryze and is known from numerous publications [Fryze S.: *Moc rzeczywista, urojona i pozoma w obwodach elektrycznych o przebiegach odksztalconych prqdu i napi* ć cia. Przegl d Elektrotechniczny 1931, nr 7; Czarnecki L. S. op. cit.; Kuczewski Z., Walczak J., Pasko M.: Moce w obwodach z przebiegami niesinusoidalnymi. Jakość i Uzytkowanie Energii Elektrycznej, 1995, nr 1; R□w□ H.: *Energia i moc w ukladach elektrycznych.* Przegl ad Elektrotechniczny, R. LXXVII nr 5/2001]. Minimizing the effective current value according to Fryze ensures a power factor value equal to unity. However, with the distorted power source voltage, in the case of resistive-inductive loads, THD of the source current is the same as the THD of the distorted supply voltage [Czarnecki op. cit.; Kosiorowski S., Stobiecki A.: Reduction of Total Harmonic Distortion and Effective Source Current in Circuits with Nonsinusoidal Waveforms. 15th Selected Issues of Electrical Engineering and Electronics (WZEE). Zakopane, 8-10.12.2019. IEEE Xplore]. The source current in the primary circuit, i.e. before compensation, is less distorted than the source current in the circuit compensated according to Fryze's power theory.

Another method of controlling an active filter when supplying a set active power P to the load in a single-phase system supplied with periodic voltage is described in the literature [Piróg S., Mondzik A., Penczek A.: *Wybór wzorca*

*ksztaltu pr du źród ł a w przypadku stosowania urz dzeń do poprawy jakości energii elektrycznej.* VII Konferencja Naukowa Sterowanie w Energoelektronice i Napedzie Elektrycznym SENE 2005, Łódź 23-25.11.2005]. It consists in forcing sinusoidal current $i_p^*(t)$ with a waveform proportional to the waveform of the fundamental harmonic of voltage $u_1(t)$ with an effective value $U_1$, to flow through a power line, according to the formula:

$$i_p^*(t) = Gu_1(t) = \frac{P}{U_1^2}u_1(t) \tag{1}$$

where: G - equivalent transmittance.

The load and the active filter connected in parallel behave like a low-pass filter, exhibiting a very high impedance to the power line current components with frequencies higher than the fundamental frequency, and coming from other, especially non-linear loads. As a result, higher harmonics of the current spread through the remaining elements of the power system, causing an increase in the voltage drop on the reactances of the source and the transmission path and thus contributing to an increase in the distortion of the supply voltage of the loads.

The aim of the invention is to provide a method for determining a compensator current waveform, which enables to increase the power factor value of the power source by limiting the effective value of the source current and to reduce the value of total harmonic distortion, THD, of the source current by reducing the effective values of higher harmonics of the source current and ensuring the possibility of transmitting active power from the higher harmonics of voltage and current to the load, which results in a reduction in the value of higher harmonics of current flowing through the remaining elements of the power system. To achieve this aim, one compensator is used in the form of a current source connected in parallel with the load.

The essence of the invention lies in a method for determining a compensator current waveform in a single-phase alternating current electrical circuit with a linear resistive-inductive load and with periodic non-sinusoidal waveforms of source voltage and current, which can be written, taking into account the initial phases of voltage harmonics, in the form of Fourier series as a sum of sinusoidal functions with a dominant first harmonic. After shifting the source voltage waveform in time such that the initial phase of the first harmonic of the source voltage equals zero, the method is characterized in that the periodic non-sinusoidal waveforms of the power source voltage and current are decomposed into even and odd components. In the odd component of the source current, which has a decisive impact on the source active power [Kosiorowski S., Stobiecki A., Dudek R. op. cit.], two important components have been distinguished, i.e. useful current $i_u(t)$ having the form of:

$$i_u(t) = \sum_{n=1}^{\infty} \sqrt{2}I_n \sin(n\omega t)\cos\varphi_n \cos(\psi_n - n\psi_1), \tag{2}$$

and detrimental current $i_d(t)$ with a value equal to:

$$i_d(t) = \sum_{n=2}^{\infty} \sqrt{2}I_n \sin(n\omega t)\sin\varphi_n \sin(\psi_n - n\psi_1), \tag{3}$$

where:

$I_n$ - effective value of the n-th harmonic of current
$\varphi_n$ - phase shift between the n-th harmonic of voltage and current
$\psi_n$ - initial phase of the n-th harmonic of voltage
$\omega = \dfrac{2\pi}{T}$ - angular frequency of the first harmonic
$T$ - period of the first harmonic.

The terms of the useful current $i_u(t)$ add up with the first harmonic component of the source current and these terms in the form of sinusoidal waveforms are proportional to the waveforms of the corresponding harmonics of the odd component of the source voltage. The useful current $i_u(t)$ is orthogonal to the detrimental current $i_d(t)$, indicated above, the terms of which do not add up with the first harmonic of the source current.

Then, based on an analysis of instantaneous and active power of the source and taking into consideration the useful current $i_u(t)$ and the detrimental current $i_d(t)$ as well as the even component of the source current $i_p(t)$ equal to:

$$i_p(t) = \sum_{n=1}^{\infty} \sqrt{2}I_n \cos(n\omega t) \left[ cos\varphi_n \sin(\psi_n - n\psi_1) - sin\varphi_n \cos(\psi_n - n\psi_1) \right] \quad (4),$$

a component of the source current is determined, which can be eliminated by means of a compensator in the form of a current source $i_k(t)$ with a value of:

$$i_k(t) = i_d(t) + i_p(t) = \sum_{n=2}^{\infty} \sqrt{2}I_n \sin(n\omega t) sin\varphi_n \sin(\psi_n - n\psi_1) +$$

$$\sum_{n=1}^{\infty} \sqrt{2}I_n \cos(n\omega t) cos\varphi_n \sin(\psi_n - n\psi_1) - \sum_{n=1}^{\infty} \sqrt{2}I_n \cos(n\omega t) sin\varphi_n cos(\psi_n -$$

$$n\psi_1) \qquad\qquad\qquad (5)$$

connected in parallel to the load.

The method for determining compensator current is presented taking into account the influence of the initial phases of harmonics of the source voltage on the decomposition of voltage, current and power of the source, which allows calculations based on the instantaneous values of these quantities. The calculations has been made using the properties of functions related to parity and oddity and the orthogonality of the system of functions of one or more variables describing the waveforms of voltage, current and instantaneous power of the source. Exact quantitative relationships have been determined based on the analysis of voltages, currents and power in the primary and compensated circuit elements.

Periodic non-sinusoidal source voltage $u°(t)$ can be written, taking into account the initial phases of voltage harmonics, in the form of Fourier series as a sum of sinusoidal or cosinusoidal functions with a dominant value of the first harmonic. Assuming that:

$$u^0(t) = \sum_{n=1}^{\infty} \sqrt{2}U_n \sin(n\omega t + \psi_n) \qquad\qquad\qquad (6)$$

where: $U_n$ - effective value of the n-th harmonic of voltage

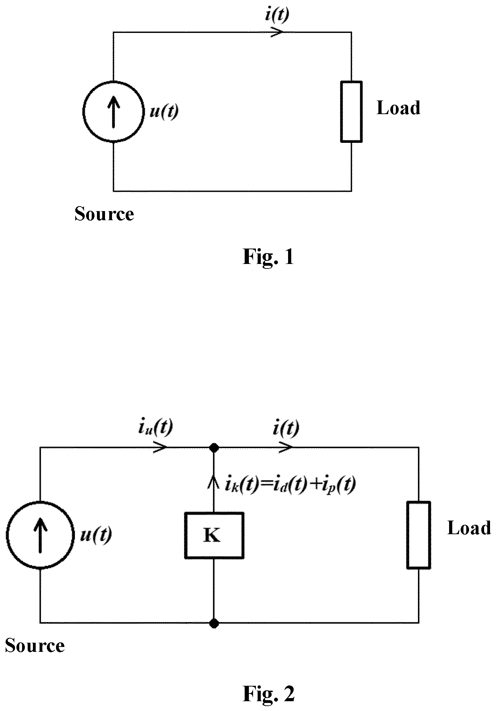

in case of a linear load (fig. 1), in the form of a serial connection of resistance R and inductance L, the current waveform in a circuit supplied with voltage $u°(t)$ has the form of

$$i^0(t) = \sum_{n=1}^{\infty} \sqrt{2}I_n \sin(n\omega t + \psi_n - \varphi_n) \qquad\qquad\qquad (7)$$

where:

$$I_n = \frac{U_n}{\sqrt{R^2 + (n\omega L)^2}} \qquad\qquad\qquad (8)$$

$$cos\varphi_n = \frac{R}{\sqrt{R^2 + (n\omega L)^2}} \qquad\qquad\qquad (9)$$

$$tg\varphi_n = \frac{n\omega L}{R} = ntg\varphi_1 \qquad\qquad\qquad (10)$$

Due to the possibility of determining the compensator current waveform and decomposition of the source current and the source active power, it is advantageous to shift the voltage waveform $u°(t)$ in time so that the initial phase of the first harmonic of voltage equals zero. According to Noether's theorem [Arnold W. I.: Metody matematyczne mechaniki klasycznej. WNT, Warszawa 1981] regarding the laws of conservation, such a shift in time of the voltage waveform does not affect the energy in the system. The waveforms of voltage $u°(t)$ and current $i°(t)$ after shifting the voltage in time so that the initial phase of the first harmonic is zero can be written as:

$$u(t) = \sum_{n=1}^{\infty} \sqrt{2}U_n \sin(n\omega t + \psi_n - n\psi_1) \qquad\qquad\qquad (11)$$

$$i(t) = \sum_{n=1}^{\infty} \sqrt{2}I_n \sin(n\omega t + \psi_n - n\psi_1 - \varphi_n) \tag{12}$$

Even components $u_p(t)$ and $i_p(t)$ and odd components $u_n(t)$ and $i_n(t)$ of the source voltage u(t) (11) and of the source current i(t) (12) are equal to:

$$u_n(t) = \sum_{n=1}^{\infty} \sqrt{2}U_n \sin(n\omega t) \cos(\psi_n - n\psi_1) \tag{13}$$

$$u_p(t) = \sum_{n=2}^{\infty} \sqrt{2}U_n \cos(n\omega t) \sin(\psi_n - n\psi_1) \tag{14}$$

$$i_n(t) = \sum_{n=1}^{\infty} \sqrt{2}I_n \sin(n\omega t) [cos\varphi_n \cos(\psi_n - n\psi_1) + sin\varphi_n \sin(\psi_n - n\psi_1)] \tag{15}$$

$$i_p(t) = \sum_{n=1}^{\infty} \sqrt{2}I_n \cos(n\omega t) [cos\varphi_n \sin(\psi_n - n\psi_1) - sin\varphi_n \cos(\psi_n - n\psi_1)] \tag{16}$$

The odd component of the source current $i_n(t)$ is the sum of the useful current $i_u(t)$ and the detrimental current $i_d(t)$:

$$i_n(t) = i_u(t) + i_d(t) \tag{17}$$

$$i_u(t) = \sum_{n=1}^{\infty} \sqrt{2}I_n \sin(n\omega t) cos\varphi_n \cos(\psi_n - n\psi_1) \tag{18}$$

$$i_d(t) = \sum_{n=2}^{\infty} \sqrt{2}I_n \sin(n\omega t) sin\varphi_n \sin(\psi_n - n\psi_1) \tag{19}$$

The basic term of the useful current $i_u(t)$ (18) is the component of the first harmonic of the source current, and the terms of this current (18) have the form of sinusoidal waveforms proportional to the waveforms of the corresponding harmonics of the odd component of the source voltage (13). The terms of the detrimental current $i_d(t)$ (19) do not add up with the first harmonic of the source current. The detrimental current $i_d(t)$ and the useful current $i_u(t)$ are orthogonal as functions of two variables, that is, time and the phase difference of the initial harmonics of the source voltage $\Theta_n = \psi_n - n\psi_1$ because:

$$\int_0^{2\Pi} \int_0^T i_u(t, \Theta_n) i_d(t, \Theta_n) dt d\Theta_n = 0 \tag{20}$$

For this reason, the detrimental current $i_d(t)$ as a non-colinear term with the useful current $i_u(t)$ should be eliminated from the source current.

Active power P of the source is determined on the basis of source instantaneous power p(t), which can be written as:

$$p(t) = u(t)i(t) = [u_n(t) + u_p(t)] \cdot [i_u(t) + i_d(t) + i_p(t)] \tag{21}$$

The individual terms of the source active power are:

$$P_1 = \frac{1}{T}\int_0^T u_n(t)i_u(t)dt = \sum_{n=1}^{\infty} U_n I_n cos\varphi_n cos^2(\psi_n - n\psi_1) \tag{22}$$

$$P_2 = \frac{1}{T}\int_0^T u_n(t)i_d(t)dt = \sum_{n=2}^{\infty} U_n I_n sin\varphi_n \cos(\psi_n - n\psi_1)sin(\psi_n - n\psi_1) \tag{23}$$

$$P_3 = \frac{1}{T}\int_0^T u_n(t)i_p(t)dt = 0 \qquad (24)$$

$$P_4 = \frac{1}{T}\int_0^T u_p(t)i_u(t)dt = 0 \qquad (25)$$

$$P_5 = \frac{1}{T}\int_0^T u_p(t)i_d(t)dt = 0 \qquad (26)$$

$$P_6 = \frac{1}{T}\int_0^T u_p(t)i_p(t)dt = \sum_{n=2}^{\infty} U_n I_n cos\varphi_n \, sin^2(\psi_n - n\psi_1) -$$

$$\sum_{n=2}^{\infty} U_n I_n sin\varphi_n \, cos(\psi_n - n\psi_1)sin(\psi_n - n\psi_1) \qquad (27)$$

The source active power in the primary circuit is the sum of the above terms and amounts to:

$$P = \sum_{n=1}^{6} P_n = P_1 + P_2 + P_6 = \sum_{n=1}^{\infty} U_n I_n cos\varphi_n \qquad (28)$$

The useful current $i_u(t)$ (18) and the detrimental current $i_d(t)$ (19) as well as the useful current $i_u(t)$ and the even component of current $i_p(t)$ (16) are pairwise orthogonal because, in addition to the relationship (20), the following equality is also satisfied:

$$\int_0^T i_p(t)i_u(t)dt = 0 \qquad (29)$$

Therefore, currents $i_d(t)$ and $i_p(t)$, as non-colinear with the useful current $i_u(t)$, can be eliminated from the source current by means of a compensator in the form of a current source connected in parallel to the load (fig. 2). Compensator current $i_k(t)$ is the sum of the currents $i_d(t)$ oraz $i_p(t)$ and is equal to:

$$i_k(t) = i_d(t) + i_p(t) = \sum_{n=2}^{\infty} \sqrt{2}I_n sin(n\omega t)sin\varphi_n sin(\psi_n - n\psi_1) +$$

$$\sum_{n=1}^{\infty} \sqrt{2}I_n cos(n\omega t)cos\varphi_n sin(\psi_n - n\psi_1) - \sum_{n=1}^{\infty} \sqrt{2}I_n cos(n\omega t)sin\varphi_n cos(\psi_n - n\psi_1) \qquad (30)$$

The active power of the compensator $P_k$ calculated on the basis of the instantaneous power of the compensator equal to the product of the source voltage $u(t)$ (11) and the compensator current $i_k(t)$ (30) taking into account the relationships (22) to (27) has the form:

$$P_k = \frac{1}{T}\int_0^T u(t)i_k(t)dt = \frac{1}{T}\int_0^T [u_n(t) + u_p(t)][i_p(t) + i_d(t)]dt = P_2 + P_6 \qquad (31)$$

As a result of summing the active power terms $P_2$ (23) and $P_6$ (27), the active power supplied to the compensator is equal to:

$$P_k = \sum_{n=2}^{\infty} U_n I_n cos\varphi_n \, sin^2(\psi_n - n\psi_1) \qquad (32)$$

The active power supplied to the compensator does not exceed the active powers from higher harmonics of voltage and current, wherein in the limiting case when the initial phases of voltage harmonics are zero, this power is equal to zero.

The source current $i(t)$ (12) before compensation is equal to the sum of the components $i_n(t)$ (15) and $i_p(t)$ (16), and after taking into account the relationship (17) is the sum of three terms:

$$i(t) = i_u(t) + i_d(t) + i_p(t) \tag{33}$$

In a compensated circuit, i.e. after eliminating the currents $i_d(t)$ and $i_p(t)$, the source current is equal to the useful current $i_u(t)$ (18). Then the source instantaneous power p(t) (21) has the form:

$$p(t) = [u_n(t) + u_p(t)]i_u(t) \tag{34}$$

The source active power is the average value of the source instantaneous power p(t) (21) and is the sum of integrals:

$$P = \frac{1}{T}\int_0^T u_n(t)i_u(t)dt + \frac{1}{T}\int_0^T u_p(t)i_u(t)dt \tag{35}$$

Based on formulas (22) and (24) one can write:

$$P = P_1 + P_4 = P_1 \tag{36}$$

Due to the relationship between the source active power after compensation and the useful current, this power is called the useful source power $P_u$ equal to:

$$P_u = \sum_{n=1}^{\infty} U_n I_n cos\varphi_n \, cos^2(\psi_n - n\psi_1) \tag{37}$$

Based on formula (37), it can be concluded that in the compensated circuit the source active power from the first harmonic of voltage and current is the same as in the primary circuit, and the active powers from the higher harmonics of source voltage and current are not greater than the active powers from the corresponding harmonics of source voltage and current in the primary circuit.

In the circuit compensated according to the invention, the source current is equal to the useful current $i_u(t)$ and has the same form as the source current after compensation determined in the invention application description [Kosiorowski S., Stobiecki A., Dudek R. op. cit.], so the quantitative relations between the values of the source power factors and total harmonic distortion, THD, coefficients in the primary circuit and in the compensated circuit are the same as those described in the invention application description [Kosiorowski S., Stobiecki A., Dudek R. op. cit.].

The power factor of the source depends on the apparent power of the source, i.e. on the product of the effective values of the source voltage and current. In accordance with the relationships presented in the invention application description [Kosiorowski S., Stobiecki A., Dudek R. op. cit.] the effective values of currents in the primary circuit $I^0$ and in the compensated circuit $I_u$ determined on the basis of formulas (7) and (18) are:

$$I^0 = \sqrt{\sum_{n=1}^{\infty} \frac{U_n^2}{R^2} \frac{1}{1+n^2 tg^2\varphi_1}} \tag{38}$$

$$I_u = \sqrt{\sum_{n=1}^{\infty} \frac{U_n^2}{R^2}\left(\frac{1}{1+n^2 tg^2\varphi_1}\right)^2 cos^2(\psi_n - n\psi_1)} \tag{39}$$

A smaller effective value of the source current $I_u$ in the compensated circuit reduces the apparent power of the source, which results in an improvement in the power factor of the source in the compensated circuit compared to the primary circuit. The quantitative relationships depend on the form of the distorted source voltage and the phase shift angle between the first harmonics of voltage and current, i.e. on the load parameters. The total harmonic distortion THD coefficients for the source current $i^0(t)$ in the primary circuit and for the source current $i_u(t)$ in the circuit according to the invention have the form:

$$THD_{i^0(t)} = \sqrt{\sum_{n=2}^{\infty} \frac{U_n^2}{U_1^2} \frac{1+tg^2\varphi_1}{1+n^2tg^2\varphi_1}} \tag{40}$$

$$THD_{i_u(t)} = \sqrt{\sum_{n=2}^{\infty} \frac{U_n^2}{U_1^2} cos^2(\psi_n - n\psi_1) \left(\frac{1+tg^2\varphi_1}{1+n^2tg^2\varphi_1}\right)^2} \tag{41}$$

Based on formulas (40) and (41), it can be concluded that the total harmonic distortion for the source current equal to $i_u(t)$ in the compensated circuit is smaller than the total harmonic distortion for the source current $i^0(t)$ in the primary circuit. The quantitative relationships between THD coefficients depend on the waveforms of the source voltage and on the load parameters, as in the case of source power factors.

The active power of the load after compensation is the sum of the power of the source $P_u$ (37) and the compensator $P_k$ (32) and has the same value as before the compensation, so it is

$$P = P_u + P_k = \sum_{n=1}^{\infty} U_n I_n cos\varphi_n \tag{42}$$

which confirms the possibility of transmitting active power from higher harmonics of voltage and current to the load. As a result, higher harmonics of current do not spread through other elements of the energy system and do not increase the distortion of the source voltage in other loads [Piróg S., Mondzik A., Penczek A. op. cit.].

The load current $i(t)$, after compensation according to the invention (fig. 2), is the sum of the compensator currents $i_k(t)$ (30) and the useful current $i_u(t)$ (18) and is equal to the load current $i^0(t)$ (7) in the primary circuit. After compensation, the load voltage also does not change. For this reason, the active power and apparent power of the load as well as the power factor and the total harmonic distortion, THD, in the compensated circuit are the same as in the primary circuit.

Below, an example of the practical implementation of the invention is presented based on the drawing, in which:

Fig. 1 shows a circuit diagram including a power source with an attached load;
Fig. 2 shows the circuit diagram of Fig. 1, in which a compensator is connected in parallel with the load.

Supply voltage with a frequency of the first harmonic f = 50 Hz is applied to a load consisting of a resistor with resistance R = 10 Ω and a coil with inductance L = 31.85 mH connected in series and has the form:

$$u^0(t) = 100\sqrt{2}\sin\left(\omega t + \frac{\pi}{6}\right) + 20\sqrt{2}\sin\left(3\omega t + \frac{\pi}{4}\right) + 10\sqrt{2}\sin\left(5\omega t - \frac{\pi}{3}\right) \tag{43}$$

For the supply voltage $u^0(t)$, current of the source and the load in a primary circuit has a waveform:

$$i^0(t) = 7.07\sqrt{2}\sin\left(\omega t + \frac{\pi}{6} - \frac{\pi}{4}\right) + 0.63\sqrt{2}\sin\left(3\omega t + \frac{\pi}{4} - \right.$$
$$\left. 1.249\right) + 0.196\sqrt{2}\sin\left(5\omega t - \frac{\pi}{3} - 1.373\right) \tag{44}$$

Source active power is equal to the load active power and amounts to:

$$P = \sum_{n=1}^{\infty} U_n I_n cos\varphi_n = 504.37 \text{ W} \tag{45}$$

The voltage waveform, after shifting in time such that the initial phase of the first harmonic equals zero, can be written as follows:

$$u(t) = 100\sqrt{2}\sin(\omega t) + 20\sqrt{2}\sin\left(3\omega t - \frac{\pi}{4}\right) + 10\sqrt{2}\sin\left(5\omega t - \frac{7\pi}{6}\right) \tag{46}$$

For the supply voltage $u(t)$, the current waveform of the source and the load is described by the relationship:

$$i(t) = 7.07\sqrt{2} \sin\left(\omega t - \frac{\pi}{4}\right) + 0.63\sqrt{2} \sin\left(3\omega t - \frac{\pi}{4} - 1.249\right) + 0.196\sqrt{2} \sin\left(5\omega t - \right.$$

$$\left. \frac{7\pi}{6} - 1.373\right) \tag{47}$$

The odd component $i_n(t)$ and even component $i_p(t)$ of the current i(t), for the voltage u(t), whose initial phase of the first harmonic equals zero, according to formulas (15) and (16) are:

$$i_n(t) = 7.07\sqrt{2} \sin(\omega t) \cos\left(\frac{\pi}{4}\right) + 0.63\sqrt{2} \sin(3\omega t)[cos\,(1.249) \cos\left(-\frac{\pi}{4}\right) +$$

$$\sin(1.249) \sin(-\frac{\pi}{4})] + 0.196\sqrt{2}\sin(5\omega t)[\cos(1.373) \cos\left(-\frac{7\pi}{6}\right) +$$

$$\sin(1.373) \sin(-\frac{7\pi}{6})] \tag{48}$$

$$i_p(t) = 7.07\sqrt{2} \cos(\omega t)[-\sin\left(\frac{\pi}{4}\right)] + 0.63\sqrt{2} \cos(3\omega t)[cos\,(1.2490) \sin\left(-\frac{\pi}{4}\right) -$$

$$\sin(1.249) \cos(-\frac{\pi}{4})] + 0.196\sqrt{2}\cos(5\omega t)[\cos(1.373) \sin\left(-\frac{7\pi}{6}\right) -$$

$$\sin(1.373) \cos(-\frac{7\pi}{6})] \tag{49}$$

The useful component $i_u(t)$ (18) and the detrimental component $i_d(t)$ (19) of the current $i_n(t)$ are determined by the relationships:

$$i_u(t) = 7.07\sqrt{2}\,sin(\omega t)\,cos\left(\frac{\pi}{4}\right) + 0.63\sqrt{2}\,sin(3\omega t)cos\,(1.249)\,cos\left(-\frac{\pi}{4}\right) +$$

$$0.196\sqrt{2}\,sin(5\omega t)\,cos(1.373)\,cos\left(-\frac{7\pi}{6}\right) = 4.999\sqrt{2}\,sin(\omega t) +$$

$$0.141\sqrt{2}\,sin(3\omega t) - 0.033\sqrt{2}\,sin(5\omega t) \tag{50}$$

$$i_d(t) = 0.63\sqrt{2}\,sin(3\omega t)\,sin(1.249)\,sin(-\frac{\pi}{4}) +$$

$$0.196\sqrt{2}\,sin(5\omega t)\,sin(1.373)\,sin(-\frac{7\pi}{6}) \tag{51}$$

Compensator current $i_k(t)$ (30), which should be eliminated from the source current, is described by the formula:

$$i_k(t) = 0.63\sqrt{2}\,sin(3\omega t)\,sin(1.249)\,sin(-\tfrac{\pi}{4})] +$$

$$0.196\sqrt{2}\,sin(5\omega t)\,sin(1.373)\,sin(-\tfrac{7\pi}{6}) +$$

$$0.63\sqrt{2}\,cos(3\omega t)cos\,(1.249)\,sin\left(-\tfrac{\pi}{4}\right) +$$

$$0.196\sqrt{2}\,cos(5\omega t)\,cos(1.373)\,sin\left(-\tfrac{7\pi}{6}\right) -$$

$$7.07\sqrt{2}\,cos(\omega t)\,sin\left(\tfrac{\pi}{4}\right) - 0.63\sqrt{2}\,cos(3\omega t)sin\,(1.249)\,cos\left(-\tfrac{\pi}{4}\right) -$$

$$0.196\sqrt{2}\,cos(5\omega t)\,sin(1.373)\,cos\left(-\tfrac{7\pi}{6}\right) \qquad (52)$$

After compensation, the source active power $P_u$ (37) is equal to:

$$P_u = 707\,cos\left(\tfrac{\pi}{4}\right) + 12.6\,cos(1.249)\,cos^2\left(-\tfrac{\pi}{4}\right) + 1.96cos(1.373)cos^2\left(-\tfrac{7\pi}{6}\right) =$$

$$502.205\ \mathrm{W}, \qquad (53)$$

whereas the compensator power $P_k$ (32) is:

$$P_k = 12.6\,cos(1.249)\,sin^2\left(-\tfrac{\pi}{4}\right) + 1.96\,cos(1.373)\,sin^2\left(-\tfrac{7\pi}{6}\right) = 2.089\ \mathrm{W} \quad (54)$$

For the load parameters RL and the source voltage given in the example, effective values and total harmonic distortion, THD, coefficients in the primary and compensated circuits were calculated for selected voltages and currents and presented in Table 1.

Table 1. Values of effective voltages and currents and THD coefficients

| quantity (formula) | $u^0(t)$ (43) | $u(t)$ (46) | $i^0(t)$ (44) | $i(t)$ (47) | $i_u(t)$ (50) |
|---|---|---|---|---|---|
| effective value | 102.47V | 102.47V | 7.10A | 7.10A | 5.00A |
| THD [%] | 22.36 | 22.36 | 9.33 | 9.33 | 2.89 |

Values of the source active power from individual harmonics of voltage and current, the total active power of the source, the source apparent power calculated as the product of the effective values of voltage and current, and the source power factor for two waveforms of the source current, i.e. the current in the primary circuit $i^0(t)$ and the useful current component $i_u(t)$ according to the invention are given in Table 2.

Table 2. Values of active power and apparent power of the source and power factor

| Source current | $P_1$ [W] | $P_3$ [W] | $P_5$ [W] | $\Sigma P_n$ [W] | $S$ [VA] | $cos\theta = \dfrac{P}{S}$ |
|---|---|---|---|---|---|---|
| $i^0(t)$ | 499.92 | 3.99 | 0.38 | 504.37 | 727.54 | 0.69 |
| $i_u(t)$ | 499.92 | 1.99 | 0.29 | 502.20 | 512.45 | 0.98 |

According to formula (42), the load active power $P$ after compensation is the sum of the source active power $P_u$ (37) and the compensator active power $P_k$ (32), and is:

$$P = P_u + P_k = 502.20 + 2.09 = 504.29\ \mathrm{W} \qquad (55)$$

The load active power after compensation is equal to the source power and the load power in the primary circuit before compensation. The differences between the load active power before compensation (504.37 W (Table 2)) and after compensation (504.29 W (55)) result from rounding errors.

The comparison of the values given in Tables 1 and 2 shows that the source power factor $cos\theta = \frac{P}{S}$ in the case of source current compensation according to the invention is over 40% higher than the source power factor in the primary circuit. Whereas the total harmonic distortion, THD, of the source current according to the invention (2.89%) is more than three times smaller than the THD of the source current in the primary circuit (9.33%). In the source active power decomposition determined on the basis of the invention, the source active power from the first harmonic of voltage and current is equal to the source active power from the first harmonic of voltage and current in the primary circuit, and the active powers from higher harmonics of voltage and current, according to formula (50), are lower than the corresponding active powers in the primary circuit (Table 2).

The advantageous effects obtained from the solution include the fact that the use of the method for determining compensator current according to the invention in a circuit with non-sinusoidal waveforms of voltage and current ensures the simultaneous implementation of several functions in the circuit by means of one compensator connected in parallel with a load:

1. The source power factor in the compensated circuit is greater than in the primary circuit, wherein the source active power from the first harmonic of source voltage and current is the same as in the primary circuit, and the active powers from higher harmonics of voltage and current are lower than the corresponding active powers in the primary circuit.
2. The total harmonic distortion, THD, of the source current is much smaller in the circuit after compensation than in the primary circuit.
3. In the circuit with compensation according to the invention, the active power from higher harmonics of voltage and current is transferred to the load, which results in a reduction of the higher harmonics of current spreading through the remaining elements of the power system.
4. The voltage, current and power of the load after compensation do not change in relation to these values before compensation.

List of references in the figures:

$u(t)$ - power source voltage
$i(t)$ - load current
$i_u(t)$ - useful component of current according to the invention
$i_d(t)$ - detrimental component of current according to the invention
$i_p(t)$ - even component of current
$i_k(t)$ - compensator current
K - current compensator - active filter connected in parallel to the load

**Claims**

1. method for determining compensator current in a single-phase alternating current electrical circuit with a linear resistive-inductive load and with periodic non-sinusoidal waveforms of source voltage and current, which can be written, taking into account the initial phases of voltage harmonics, in the form of Fourier series as a sum of sinusoidal functions with a dominant first harmonic, wherein after shifting the source voltage waveform in time such that the initial phase of the first harmonic of the source voltage equals zero, the method being **characterized in that** the periodic non-sinusoidal waveforms of the power source voltage and current are decomposed into even and odd components, wherein the odd component of the source current is the sum of useful current in the form of

$$i_u(t) = \sum_{n=1}^{\infty} \sqrt{2}I_n \sin(n\omega t)\, cos\varphi_n \cos(\psi_n - n\psi_1),$$

where:

$n$ - harmonic order,

$I_n$ - effective value of the n-th harmonic of current,

$\omega$ - angular frequency of the fundamental harmonic,

$\varphi_n$ - phase shift between the n-th harmonic of voltage and current,

$\psi_n$ - initial phase of the n-th harmonic of voltage,

wherein the terms of the useful current $i_u(t)$ add up with the first harmonic component of the source current and these terms in the form of sinusoidal waveforms are proportional to the waveforms of the corresponding harmonics of the odd component of the source voltage,

and of orthogonal detrimental current with a value equal to

$$i_d(t) = \sum_{n=2}^{\infty} \sqrt{2} I_n \sin(n\omega t) \, sin\varphi_n \sin(\psi_n - n\psi_1)$$

, the terms of which do not add up with the first harmonic of the source current, and then based on an analysis of instantaneous and active power of the source, using the source current in the form of a sum of the even component

$$i_p(t) = \sum_{n=1}^{\infty} \sqrt{2} I_n \cos(n\omega t) \left[ cos\varphi_n \sin(\psi_n - n\psi_1) - sin\varphi_n \cos(\psi_n - n\psi_1) \right]$$

and of the odd component of the source current $i_n(t)$ composed of the useful current $i_u(t)$ and the detrimental current $i_d(t)$, a component of the source current $i_k(t)$ is determined, which should be eliminated from the waveform of the source current by means of a known compensator (K) in the form of a current source with a waveform of

$$i_k(t) = i_d(t) + i_p(t) = \sum_{n=2}^{\infty} \sqrt{2} I_n \sin(n\omega t) sin\varphi_n sin(\psi_n - n\psi_1) +$$

$$\sum_{n=1}^{\infty} \sqrt{2} I_n \cos(n\omega t) cos\varphi_n sin(\psi_n - n\psi_1) - \sum_{n=1}^{\infty} \sqrt{2} I_n \cos(n\omega t) sin\varphi_n cos(\psi_n - n\psi_1),$$

connected in parallel to the load.

Fig. 1

Fig. 2

Europäisches
Patentamt

European
Patent Office

Office européen
des brevets

# EUROPEAN SEARCH REPORT

**Application Number**

EP 23 20 2562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MATTAR JONATHAN RUSSI ET AL: "A single phase active filter as a harmonic compensator", 2013 BRAZILIAN POWER ELECTRONICS CONFERENCE, IEEE, 27 October 2013 (2013-10-27), pages 1234-1238, XP032585590, ISSN: 2175-8603, DOI: 10.1109/COBEP.2013.6785273 [retrieved on 2014-04-09] * the whole document * | 1 | INV. H02J3/01 |
| A | PEDRO NEVES ET AL: "Experimental Results of a Single-Phase Shunt Active Filter Prototype with Different Switching Techniques", INDUSTRIAL ELECTRONICS, 2007. ISIE 2007. IEEE INTERNATIONAL SYMPOSIUM ON, IEEE, PI, 1 June 2007 (2007-06-01), pages 2499-2504, XP031156536, ISBN: 978-1-4244-0754-5 * the whole document * | 1 | |
| | | | **TECHNICAL FIELDS SEARCHED (IPC)** |
| A | CZARNECKI LESZEK S: "From steinmetz to currents' physical components (CPC): History of power theory development", 2016 INTERNATIONAL CONFERENCE ON APPLIED AND THEORETICAL ELECTRICITY (ICATE), IEEE, 6 October 2016 (2016-10-06), pages 1-10, XP033003323, DOI: 10.1109/ICATE.2016.7754600 [retrieved on 2016-11-22] * the whole document * | 1 | H02J |

The present search report has been drawn up for all claims

| Place of search | Date of completion of the search | Examiner |
|---|---|---|
| Munich | 26 March 2024 | Hanisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9124169 B2
- US 8471488 B1
- PL 436510, Kosiorowski S., Stobiecki A., Dudek R.

### Non-patent literature cited in the description

- **ATABIEKOW G. I.** Teoria liniowych obwodów elektrycznych. WNT, 1967
- **CHOLEWICKI T.** Elektrotechnika teoretyczna, t. 1. WNT, 1973
- **KUCZEWSKI Z.** ; **WALCZAK J.** ; **PASKO M.** Moce w obwodach z przebiegami niesinusoidalnymi. *Jakość i Uzytkowanie Energii Elektrycznej*, 1995 (1)
- **KOSIOROWSKI S.** ; **STOBIECKI A.** Reduction of Total Harmonic Distortion and Effective Source Current in Circuits with Nonsinusoidal Waveforms. *15th Selected Issues of Electrical Engineering and Electronics (WZEE). Zakopane, 8-10.12.2019. IEEE Xplore*, 08 December 2019
- **ARNOLD W. I.** Metody matematyczne mechaniki klasycznej. WNT, 1981